# EUROPEAN PATENT SPECIFICATION

(11) **EP 1 710 599 B1**
(45) Date of publication and mention of the grant of the patent: **11.11.2015**
(21) Application number: 05007644.7
(22) Date of filing: 07.04.2005
(51) Int. Cl.: G01S 5/14, G01S 1/00

(54) **Mobile device**
Mobilgerät.
Dispositif mobile.

(43) Date of publication of application: 11.10.2006
(73) Proprietor: Intel Mobile Communications GmbH, 85579 Neubiberg (DE)
(72) Inventor: Nylen, Tomas, 194 63 Upplands Väsby (SE)
(74) Representative: Viering, Jentschura & Partner Patent- und Rechtsanwälte

(56) References cited:
- WO-A-02/095438
- US-A1- 2003 134 657
- US-B1- 6 700 533
- PATENT ABSTRACTS OF JAPAN vol. 2002, no. 02, 2 April 2002 (2002-04-02) -& JP 2001 305206 A (MATSUSHITA ELECTRIC WORKS LTD), 31 October 2001 (2001-10-31)

## Description

### Field of invention

The present invention relates to a mobile device comprising a positioning unit, the positioning unit being provided to determine the position of the device. The present invention also relates to a method of determining the position of a mobile device.

### Description of the background art

Mobile devices, such as mobile phones, personal digital assistants (PDA), lap top computers and vehicles, may comprise a positioning unit, by means of which the geographical position of the device may be determined.

A positioning unit requires a receiver for receiving signals from geographical points that are well defined whereby the position might be determined. Some of the most widely used positioning units use signals from satellites or base stations in ground based communication systems in order to make the determination.

There are different global navigation satellite systems for global positioning services for civilian use such as the Global Positioning System (GPS) from the United States, the Global Navigation Satellite System (GLONASS) from Russia and the Galileo system from Europe. There are also different ground based systems that can be used for positioning purposes, such as the Global System for Mobile communication (GSM).

A receiver adapted to determine a position according to any of these systems receives signals from well-defined geographical points within the system, such as satellites or base stations, and makes the determination of the position from these signals. It is also possible to have a receiver that determines a position with the aid of two or more different positioning systems in order to increase the accuracy of the determination or the availability of the system.

One of the major problems with mobile devices is power consumption and a receiver in a positioning unit requires power each time the receiver receives signals in order to determine the position.

WO 02/095438 A relates to a communication system for tracking asset globally accesses multiple communication networks and switches among them, choosing the most economic, available communication mode without need for a constant power supply. An integrated motion sensor uses a combination of GPS updating and dynamic movement calculation to obtain the most reliable position estimation. The system obtains position information from GPS satellites whenever valid GPS signals are available, and provides its own location tracking capability when GPS signals are not accessible.

US 6,700,533 B1 relates to a system for tracking objects outdoors. Tags attached to objects such as trailers include GPS receivers. Tags transmit uncorrected position and satellite data to a base station, where differential corrections are applied, providing two to five meter accuracy of the position of the tag and object. When a tag powers on, it receives accurate time and current satellite data from a base station, enabling the tags to acquire the satellite signal quickly and with minimum power consumption.

### Summary of the present invention

It is an object of the present invention to provide a positioning unit for a mobile device with low power consumption, but yet accurate and updated with regards to the position of the mobile device.

It is also an object of the present invention to provide a positioning unit that will know when a new determination of the position is required and that only will receive signals for determination of the position when a new determination is required.

With the purpose to obtain one or more of the above identified objects, and from the standpoint of a mobile device comprising a positioning unit, where the positioning unit is adapted to determine the position of the device, the present invention teaches that the device comprises a movement sensor, which movement sensor is adapted to detect a movement of the device.

The present invention specifically teaches that when the positioning unit is requested to determine the position, the positioning unit is adapted to use the last position as a new position if no movement of the device has been detected by the sensor since the last position was determined, and that the positioning unit is adapted to determine a new position if a movement of the device has been detected by the sensor since the last position was determined.

This means that if the device has not been moved since the last time a position was determined, no new position is determined and thus no new signals are received for determination of the position, thus saving energy since a correct position can be presented without using the energy-consuming receiver in the positioning unit.

Different kinds of movement sensors may be used depending on the requirements of the sensor and the use of the mobile device. The sensor may be a low cost sensor, such as a mechanical movement sensor for consumer mobile devices that are very cost sensitive. The sensor may also be a high sensitive movement sensor for mobile devices and applications with specific requirements.

It could for instance be required that calm movements within a small area should not be regarded as an actual movement and thus presenting the last position as a new position without making a new determination of the position. In order to achieve this the present invention proposes that the device comprises a calculating unit adapted to calculate the distance of a movement from the last position by means of information from the sensor. This embodiment teaches that the sensor is adapted to present a position as being the same position as the last position if the calculating unit indicates that the device has been moved within a predefined radius around the last position, and that the sensor is adapted to determine a new position if the calculating unit indicates that the device has been moved outside of the predefined radius.

The present invention teaches that the mobile device comprises a positioning unit with a receiver adapted to receive signals from one or more available positioning systems, such as a GPS receiver and/or Galileo receiver and/or a GLONASS receiver, or a receiver adapted to receive signals from any ground based system, such as a GSM receiver.

The present invention also teaches that the mobile device may be a mobile phone, a PDA, a lap top computer, or a vehicle, such as a car or a boat.

The present invention also relates to a method of determining the position of a mobile device comprising a positioning unit. The inventive method teaches that when the positioning unit is requested to determine the position, the last position is used as new position if the device has not been moved since the last position was determined, and that a new position is determined if the device has been moved since the last position P1 was determined.

An alternative embodiment of the inventive method proposes the calculation of the distance of a movement from the last position, that a position is regarded as being the same position as the last position if the device has been moved within a predefined radius around the last position, and that a new position is determined if the device has been moved outside of the predefined radius.

The advantages of a mobile device or a method according to the present invention are that the positioning information of the mobile device will always be updated and accurate without the constant use of the receiver belonging to the positioning unit, thus saving power, which is important when it comes to mobile devices.

### Brief description of the drawings.

A mobile device and a method according to the present invention will now be described in detail with reference to the accompanying drawings, in which:
- Figure 1: is a schematic and very simplified illustration of an inventive mobile device, and
- Figure 2: is a flow chart representing the determination of the position of the mobile device.

### Description of embodiments as presently preferred

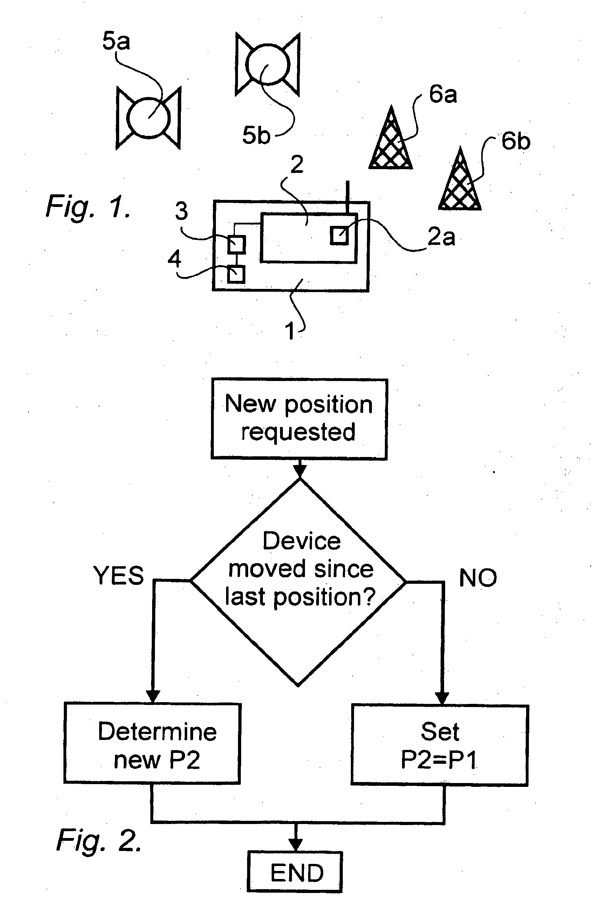

The present invention will be described with reference to Figure 1, showing a mobile device 1 comprising a positioning unit 2, which positioning unit 2 is adapted to determine the position P1 of the device 1.

The device according to the invention also comprises a movement sensor 3, which movement sensor is adapted to detect a movement of the device.

When the positioning unit is requested to determine the position, it is specifically taught that the positioning unit 2 is adapted to use the last position P1 as new position P2 if no movement of the device 1 has been detected by the sensor 3 since the last position P1 was determined, and that the positioning unit 2 is adapted to determine a new position P2 if a movement of the device 1 has been detected by the sensor 3 since the last position P1 was determined.

Figure 2 shows a flow chart representing how the inventive mobile device is adapted to determine its position according to the following steps:
- A: A new position is requested.
- B: Has device moved since last position?
- C: If yes: determine new position P2.
- D: If no: set new position P2 to same value as old position P1.
- E: End

The sensor 3 may be a low cost sensor, such as a mechanical movement sensor, or a high sensitive movement sensor depending on requirements in the specific embodiment.

A high sensitive movement sensor might for instance be able to detect smooth and slow movements, such as the movements of a boat at anchor but moving in the sea. This further example proposes that the device 1 comprises a calculating unit 4 adapted to calculate the distance of a movement from the last position by means of information from the sensor 3. The sensor 3 is adapted to present a position as being the same position as the last position if the calculating unit 4 indicates that the device 1 has been moved within a predefined radius around the last position, and the sensor 3 is adapted to determine a new position if the calculating unit 4 indicates that the device 1 has been moved outside of the predefined radius.

Such a device 1 might be adapted to allow a user to set the radius according to his/her own requirements.

A mobile device 1 may comprise a positioning unit 2 with a receiver 2a adapted to receive signals from one or more available global navigation satellite systems 5a, 5b, such as a GPS receiver and/or Galileo receiver and/or a GLONASS receiver.

A mobile device 1 may also comprise a positioning unit 2 with a receiver 2a adapted to receive signals from one or more available ground based systems 6a, 6b, such as a GSM receiver.

The present invention might be implemented in several different kinds of mobile devices and it should be understood that the invention is not restricted to what kind of mobile device it is implemented in. An inventive mobile device 1 might for instance be a handheld device, such as a mobile phone, a PDA, or a lap top computer, or it might be a vehicle, such as a car or a boat.

The present invention also relates to a method of determining the position of a mobile device 1 comprising a positioning unit 2. This method will now be described with renewed reference to figure 1.

The present invention teaches that when the positioning unit 2 is requested to determine the position, the last position P1 is used as new position P2 if the device 1 has not been moved since the last position P1 was determined, and that a new position P2 is determined if the device 1 has been moved since the last position P1 was determined.

An alternative embodiment of the inventive method proposes the calculation of the distance of a movement from the last position P1, that a is regarded as being the same position as the last position P1 if the device 1 has been moved within a predefined radius around the last position P1, and that a new position P2 is determined if the device 1 has been moved outside of the predefined radius.

The method according to the invention teaches the reception of signals from one or more available global navigation satellite systems 5a, 5b, such GPS, Galileo, or GLONASS, and/or from one or more available ground based systems 6a, 6b, such GSM, in order to determine the position.

The method according to the invention is not restricted to be used with any specific kind of mobile device. It may for instance be implemented in handheld devices, such as a mobile phone, a PDA, or a lap top computer, or a vehicle, such as a car or a boat.

It will be understood that the invention is not limited to the aforedescribed and illustrated exemplifying embodiments thereof and that modifications can be made within the scope of the concept according to the invention as illustrated in the accompanying Claims.

### List of reference symbols

- 1: mobile device
- 2: positioning unit
- 2a: receiver
- 3: sensor
- 4: calculating unit
- 5a, 5b: global navigation satellite systems
- 6a, 6b: ground based systems

## Claims

1. Mobile device (1), comprising:
a positioning unit (2) with a receiver (2a), wherein said positioning unit is adapted to determine a new position (P2) of said device (1),
a movement sensor (3), wherein said movement sensor (3) is adapted to detect a movement of said device (1),
**characterised in that** when said positioning unit (2) is requested to determine the new position (P2), said positioning unit (2) is adapted to use the last position (P1) as new position, if no movement of said device (1) has been detected by said sensor (3) since the last position was determined, and that said positioning unit (2) is adapted to determine a new position, if a movement of said device (1) has been detected by said sensor (3) since the last position was determined.

2. Mobile device according to claim 1, **characterised in that** said sensor is a low cost sensor, such as a mechanical movement sensor (3).

3. Mobile device according to any preceding claim, **characterised in that** said receiver (2a) is adapted to receive signals from one or more available global navigation satellite systems (5a, 5b), such as a GPS receiver, a Galileo receiver, or a GLONASS receiver, and/or from one or more available ground based systems (6a, 6b), such as a GSM receiver.

4. Mobile device according to any preceding claim, **characterised in that** said device is a small handheld device (1), such as a mobile phone, a personal digital assistant, or a lap top computer.

5. Mobile device according to any claims 1 to 3, **characterised in that** said device is a vehicle (1), such as a car or a boat.

6. Method of determining the position of a mobile device comprising a positioning unit (2) with a receiver (2a) and a movement sensor (3), **characterised in that** when said positioning unit (2) is requested to determine the new position (P2), the last position (P1) is used as new position by said positioning unit (2) if said device has not been moved since the last position was determined, and that a new position is determined by said positioning unit (2) if said device has been moved since the last position was determined.

7. Method according to claim 6, **characterised in that** signals from one or more available global navigation satellite systems (5a, 5b), such GPS, Galileo, or GLONASS, and/or from one or more available ground based systems, such GSM, are received by said receiver (2a) in order to determine said position by said positioning unit (2).

## Patentansprüche

1. Mobilgerät (1), das umfasst:
eine Positionierungseinheit (2) mit einem Empfänger (2a), wobei die Positionierungseinheit so ausgelegt ist, dass sie eine neue Position (P2) des Geräts (1) ermittelt,
einen Bewegungssensor (3), wobei der Bewegungssensor (3) so ausgelegt ist, dass er eine Bewegung des Geräts (1) detektiert,
**dadurch gekennzeichnet, dass** dann, wenn es erforderlich ist, dass die Positionierungseinheit (2) die neue Position (P2) ermittelt, die Positionierungseinheit (2) dazu ausgelegt ist, die letzte Position (P1) als neue Position zu verwenden, falls seit der Ermittlung der letzten Position von dem Sensor (3) keine Bewegung des Geräts (1) detektiert worden ist, und dass die Positionierungseinheit (2) so ausgelegt ist, dass sie eine neue Position ermittelt, falls seit der Ermittlung der letzten Position von dem Sensor (3) eine Bewegung des Geräts (1) detektiert worden ist.

2. Mobilgerät nach Anspruch 1, **dadurch gekennzeichnet, dass** der Sensor ein kostengünstiger Sensor, wie z. B. ein mechanischer Bewegungssensor (3), ist.

3. Mobilgerät nach einem der vorhergehenden Ansprüche, **dadurch gekennzeichnet, dass** der Empfänger (2a) so ausgelegt ist, dass er Signale aus einem oder mehreren zur Verfügung stehenden globalen Navigationssatellitensystemen (5a, 5b), wie z. B. einem GPS-Empfänger, einem Galileo-Empfänger oder einem GLONASS-Empfänger, und/oder aus einem oder mehreren am Boden stationierten Systemen (6a, 6b), wie z. B. einem GSM-Empfänger, empfängt.

4. Mobilgerät nach einem der vorhergehenden Ansprüche, **dadurch gekennzeichnet, dass** das Gerät ein kleines Handgerät (1), wie z. B. ein Mobiltelefon, ein persönlicher digitaler Assistent oder ein Laptop-Computer, ist.

5. Mobilgerät nach einem der Ansprüche 1 bis 3, **dadurch gekennzeichnet, dass** das Gerät ein Fahrzeug (1), wie z. B. ein Auto oder ein Boot, ist.

6. Verfahren zum Ermitteln der Position eines Mobilgeräts, das eine Positionierungseinheit (2) mit einem Empfänger (2a) und einen Bewegungssensor (3) umfasst, **dadurch gekennzeichnet, dass** dann, wenn es erforderlich ist, dass die Positionierungseinheit (2) die neue Position (P2) ermittelt, die letzte Position (P1) als neue Position von der Positionierungseinheit (2) verwendet wird, falls das Gerät seit der Ermittlung der letzten Position nicht bewegt worden ist, und dass von der Positionierungseinheit (2) eine neue Position ermittelt wird, falls das Gerät seit der Ermittlung der letzten Position bewegt worden ist.

7. Verfahren nach Anspruch 6, **dadurch gekennzeichnet, dass** Signale aus einem oder mehreren zur Verfügung stehenden globalen Navigationssatellitensystemen (5a, 5b), wie z. B. GPS, Galileo oder GLONASS, und/oder aus einem oder mehreren zur Verfügung stehenden auf dem Boden stationierten Systemen, wie z. B.GSM, von dem Empfänger (2a) empfangen werden, um die Position mittels der Positionierungseinheit (2) zu ermitteln.

## Revendications

1. Dispositif mobile (1), comprenant :
une unité de positionnement (2) à récepteur (2a), dans lequel ladite unité de positionnement est adaptée pour déterminer une nouvelle position (P2) dudit dispositif (1),
un capteur de mouvement (3), dans lequel ledit capteur de mouvement (3) est adapté pour détecter un mouvement dudit dispositif (1),
**caractérisé en ce que** lorsqu'il est demandé à ladite unité de positionnement (2) de déterminer la nouvelle position (P2), ladite unité de positionnement (2) est adaptée pour utiliser la dernière position (P1) comme nouvelle position, si aucun mouvement dudit dispositif (1) n'a été détecté par ledit capteur (3) depuis la détermination de la dernière position, et **en ce que** ladite unité de positionnement (2) est adaptée pour déterminer une nouvelle position, si un mouvement dudit dispositif (1) a été détecté par ledit capteur (3) depuis la détermination de la dernière position.

2. Dispositif mobile selon la revendication 1, **caractérisé en ce que** ledit capteur est un capteur de faible coût, tel qu'un capteur de mouvement mécanique (3).

3. Dispositif mobile selon l'une quelconque des revendications précédentes, **caractérisé en ce que** ledit récepteur (2a) est adapté pour recevoir des signaux depuis un ou plusieurs systèmes de satellites de navigation globale (5a, 5b), tel qu'un récepteur GPS, un récepteur Galileo, ou un récepteur GLONASS, et/ou depuis un ou plusieurs systèmes terrestres disponibles (6a, 6b), tel qu'un récepteur GSM.

4. Dispositif mobile selon l'une quelconque des revendications précédentes, **caractérisé en ce que** ledit dispositif est un petit dispositif portable (1), tel qu'un téléphone portable, un assistant numérique personnel, ou un ordinateur personnel.

5. Dispositif mobile selon l'une quelconque des revendications 1 à 3, **caractérisé en ce que** ledit dispositif est un véhicule (1), tel qu'une voiture ou un bateau.

6. Procédé de détermination de la position d'un dispositif mobile comprenant une unité de positionnement (2) à récepteur (2a) et un capteur de mouvement (3), **caractérisé en ce que** lorsqu'il est demandé à ladite unité de positionnement (2) de déterminer la nouvelle position (P2), ladite unité de positionnement (2) utilise la dernière position (P1) comme nouvelle position si ledit dispositif n'a pas bougé depuis la détermination de la dernière position, et **en ce que** ladite unité de positionnement (2) détermine une nouvelle position si ledit dispositif a été déplacé depuis la détermination de la dernière position.

7. Procédé selon la revendication 6, **caractérisé en ce que** des signaux depuis un ou plusieurs systèmes de satellites de navigation globale (5a, 5b), tel que GPS, Galileo, ou GLONASS, et/ou depuis un ou plusieurs systèmes terrestres disponibles, tel que GSM, sont reçus par ledit récepteur (2a) afin de déterminer ladite position par ladite unité de positionnement (2).
